# EUROPEAN PATENT SPECIFICATION

(11) **EP 4 306 175 B1**
(45) Date of publication and mention of the grant of the patent: **07.05.2025**
(21) Application number: 23164109.3
(22) Date of filing: 24.03.2023
(51) Int. Cl.: A62C 2/06, C09K 21/14, F02C 7/25, F16J 15/06, E04B 1/94, C09K 21/00

(54) **FIRE SEALS WITH SELF-HEALING PROPERTIES**
FEUERDICHTUNGEN MIT SELBSTHEILENDEN EIGENSCHAFTEN
JOINTS COUPE-FEU À PROPRIÉTÉS AUTO-RÉPARANTES

(30) Priority: 13.07.2022 US 202217812223
(43) Date of publication of application: 17.01.2024
(73) Proprietor: The Boeing Company, Arlington, VA 22202 (US)
(72) Inventor: PRAKASH, Om, Arlington, 22202 (US); KANDHASAMY, Kamaraj, Arlington, 22202 (US)
(74) Representative: Arnold & Siedsma

(56) References cited:
- EP-A1- 3 659 796
- US-A1- 2007 066 738

## Description

### BACKGROUND

Fire-seals and high temperature seals are subject to harsh operating conditions and thus require material properties relating to high temperature exposure, ignition, burn-through, hold-pressure, stability against variety of fluids, etc. With advancement in engines that operate at higher temperatures, greater functional performance is expected of sealing materials. Many current materials used for fire seals are expensive and are not capable of long-term exposure to harsh operating environments.

EP 3 659 796 A1 states in its abstract that fire-retardant composites, methods of making fire-retardant composites, and use thereof are described therein. A fire-retardant composite can include two fire-retardant laminates, and a porous thermoplastic core material disposed between the two fire-retardant laminates. Each laminate can have one or more ply, each of the plies can include a plurality of fibers in a thermoplastic polymer matrix that includes a fire-retardant composition.

US 2007/066738 A1 states in its abstract that blends of polysulfones, polyethersulfones and polyphenylene ether sulfones with resorcinol based polyesters, or resorcinol based polyester carbonate polymers, and silicone copolymers have improved flame resistance. Peak heat release energy is reduced and the time to reach peak heat release is increased.

Accordingly, those skilled in the art continue with research and development efforts in the field of fire seals.

### SUMMARY

The present disclosure relates to a fire seal according to claim 1 and a fire sealing method according to claim 15.

Disclosed are fire seals.

In one example, the disclosed fire seal includes an amorphous material and a bulk material supporting the amorphous material. The bulk material is fire resistant.

Also disclosed are multi-member assemblies.

In one example, the disclosed multi-member assembly includes a first structural member and a second structural member opposed from the first structural member. The multi-member assembly further includes a fire seal positioned between the first structural member (202) and the second structural member. The fire seal includes a bulk material and an amorphous material supported by the bulk material. The bulk material is fire resistant.

Also disclosed are fire-sealing methods.

In one example, the disclosed fire-sealing method includes positioning a fire seal between a first structural member and a second structural member. The fire seal includes a bulk material and an amorphous material supported by the bulk material. The bulk material is fire resistant.

Other examples of the disclosed fire seals and associated multi-member assemblies and fire-sealing methods will become apparent from the following detailed description, the accompanying drawings, and the appended claims.

### BRIEF DESCRIPTION OF THE DRAWINGS

FIG. 1 is a cross-sectional schematic of a multi-member assembly;
FIG. 2 is a cross-sectional schematic of a fire seal of the multi-member assembly of FIG. 1;
FIG. 3 is a cross-sectional schematic of a portion of the fire seal of FIG. 2;
FIG. 4 is a cross-sectional schematic of a portion of the fire seal of FIG. 2;
FIG. 5A is a cross-sectional schematic of an amorphous material of the fire seal of FIG. 2;
FIG. 5B is a cross-sectional schematic of a portion of the amorphous material of FIG. 5A;
FIG. 5C is cross-sectional schematic of a portion of the amorphous material of FIG. 5A;
FIG. 6 is a flow diagram of an aircraft manufacturing and service methodology; and
FIG. 7 is a schematic illustration of an aircraft.

### DETAILED DESCRIPTION

The following detailed description refers to the accompanying drawings, which illustrate specific examples described by the present disclosure. Other examples having different structures and operations do not depart from the scope of the present disclosure. Like reference numerals may refer to the same feature, element, or component in the different drawings.

Illustrative, non-exhaustive examples, which may be, but are not necessarily, claimed, of the subject matter according to the present disclosure are provided below. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

References throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but do not necessarily, refer to the same example.

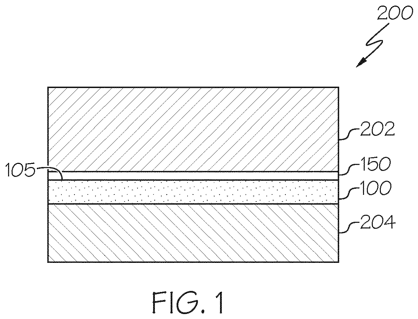

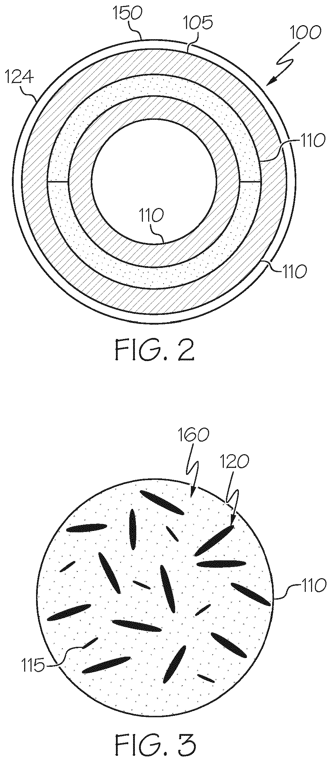

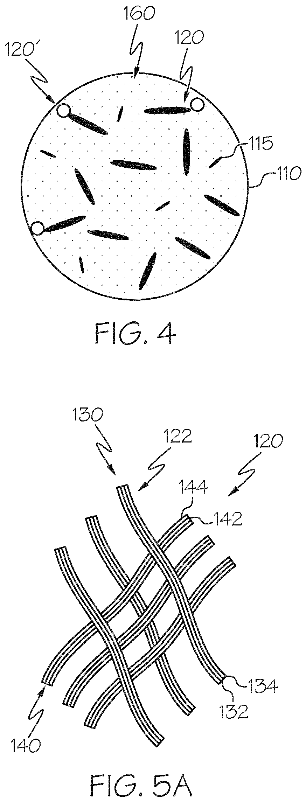

Referring to FIGs. 1-3, disclosed is a fire seal 100. The fire seal 100 includes an amorphous material 120 (FIG. 3) and a bulk material 110 (FIGs. 2 and 3) supporting the amorphous material 120. In one example, the amorphous material 120 is layered with the bulk material 110, see FIG. 2. In another example, the amorphous material 120 is dispersed in the bulk material 110, see FIG. 3 and FIG. 4. In yet another example, the amorphous material 120 is embedded in the bulk material 110.

The fire seal 100 may further include a nano-clay material 115 supported by the bulk material 110, see FIG. 3 and FIG. 4. The nano-clay material 115 may have an average particle size within a range from about 10 nm to about 1000 nm, such as an average particle size within a range from about 25 nm to about 500 nm, or an average particle size within a range from about 50 nm to about 100 nm. The nano-clay material 115 may be incorporated as a single layer or multiple layers to increase the diffusion barrier. For example, a high tortuosity diffusion path in the fire seal 100 material due to the addition of nano-clay material 115 may reduce the oxygen diffusion rate. A multi-layer assembly including nano-clay material 115 may help achieve ultra-low diffusion coefficients in the fire seal 100.

In addition to nano-clay material 115, in one or more examples, the fire seal 100 may include one or more additives to promote, among other things, CO₂ evolution beyond specific temperature thresholds. Examples include carbonates (e.g., calcium carbonate and/or sodium carbonate), bicarbonates (e.g., sodium bicarbonate), glucose, citrates, and the like, and mixtures thereof.

The fire seal 100 may also include other additives. Examples of other additives include, but are not limited to, silica, alumina, zirconia, graphene, graphene oxide, graphite oxide, and the like, and mixtures thereof, which may be supported by the bulk material 110.

Referring to FIG. 2, in one or more examples, the fire seal 100 may include an infrared-reflective coating 150 on an outside surface 105 of the fire seal 100. The infrared-reflective coating 150 may include inclusions that limit heat absorption in the material. The infrared-reflective coating 150 may include, for example, infrared-reflective pigments (e.g., leafing aluminum flakes) in a binder (e.g., thermoset resin).

The amorphous material 120 may include any material having requisite material properties for the fire seal 100, specifically related to self-healing of one or more crack or defect 160 that may manifest after exposure to high temperatures. In one example, the amorphous material 120 includes a glass material. In another example, the amorphous material 120 includes a glass powder material. In a non-limiting example, the amorphous material 120 includes a vanadate glass material. In another example, the amorphous material 120 includes a sponge material. In another example, the amorphous material 120 includes a fiber material. In yet another example, the amorphous material 120 includes a combination or mixture of materials.

The amorphous material 120 has a glass transition temperature T_{g}. In one example, the glass transition temperature T_{g} is between approximately 200 °C and approximately 600 °C. In another example, the glass transition temperature T_{g} is between approximately 300 °C and approximately 500 °C. Upon reaching the glass transition temperature T_{g}, the amorphous material 120 may become a flowy amorphous material 120', see FIG. 4, and can thus flow into one or more crack or defect 160 of the fire seal 100.

The bulk material 110 is fire resistant. The bulk material 110 decomposes at a decomposition temperature T_{D}. In one example, the decomposition temperature T_{D} is at least 400 °C. In another example, the decomposition temperature T_{D} is at least 500 °C. In yet another example, the decomposition temperature T_{D} is at least 600 °C. The decomposition temperature T_{D} may be different than the glass transition temperature T_{g}. In one or more examples, a difference between the glass transition temperature T_{g} and the decomposition temperature T_{D} is at least 20 °C. In another example, a difference between the glass transition temperature Tg and the decomposition temperature T_{D} is at least 30 °C.

The bulk material 110 may include any material having requisite material properties for the fire seal 100. In one example, the bulk material 110 includes a ceramic material. In one specific example, the bulk material 110 includes ceramic oxide fibers. In another example, the bulk material 110 includes a polymeric material. For example, the bulk material 110 may include aramid fibers, such as, for example, para-aramid material (e.g., KEVLAR brand fibers commercially available from DuPont) and/or a meta-aramid material (e.g., NOMEX brand fibers/sheets commercially available from DuPont). In another example, the bulk material 110 may include ceramic oxide fibers.

Further, the bulk material 110 may include one or more of a fabric material, a foam material, and a felt material. Examples of a fabric material include Nextel^{™} (AF-10, AF-10-900) (trademarks of 3M^{™}), Nomex^{®} (HT-2002, HT001) (trademarks of Dupont^{™}), Dacron^{™} (trademark of Dupont^{™}), Kevlar^{™} (trademark of Dupont^{™}), S2, and E-glass.

Referring to FIG. 1, in one or more examples, the fire seal 100 includes a coating on an outside surface of the fiber material. In one example, the coating includes a polymer material. In another example, the coating includes a second amorphous material 124 having a second glass transition temperature T_{g2}. The glass transition temperature T_{g} and the second glass transition temperature T_{g2} may be different. In one example, a difference between the glass transition temperature T_{g} and the second glass transition temperature T_{g2} is at least 10 °C. In another example, a difference between the glass transition temperature T_{g} and the second glass transition temperature T_{g2} is at least 20 °C.

Referring to FIG. 5A, in one or more examples, the amorphous material 120 includes a plurality of glass fibers 122. In one example, the plurality of glass fibers 122 is braided together. In another example, the plurality of glass fibers 122 is woven together. The plurality of glass fibers may include a first fiber 130 having a first glass transition temperature T_{fg1} and a second fiber 140 having a second glass transition temperature T_{fg2}. In one example, the first fiber 130 and the second fiber 140 are glass.

In one example, a difference between the first glass transition temperature T_{fg1} of the first fiber 130 and the second glass transition temperature T_{fg2} of the second fiber 140 is at least 20 °C. In another example, a difference between of the first fiber and the second glass transition temperature T_{fg2} of the second fiber is at least 30 °C.

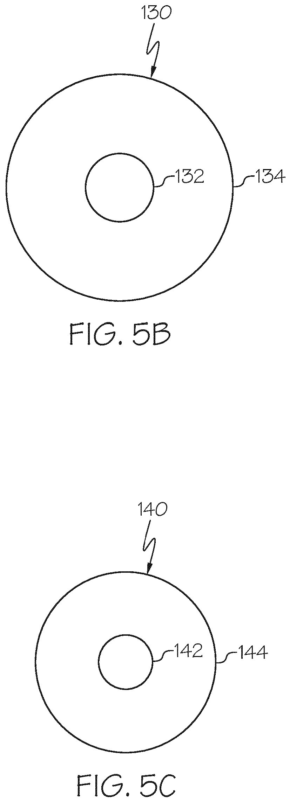

Still referring to FIG. 5A, in one or more examples, the amorphous material 120 includes a first fiber 130 having a core material 132 and a glass coating 134 on an outside surface of the core material 132, see FIG. 5B. The glass coating 134 has a coating glass transition temperature T_{cg}. The amorphous material 120 may further include a second fiber 140 entwined with the first fiber 130. The second fiber 140 has a second core material 142 and a second coating 144 on an outside surface of the second core material 142, see FIG. 5C. The second coating 144 has a second coating 144 glass transition temperature T_{cg2}.

In one example, the core material 132 of the first fiber 130 and the second core material 142 of the second fiber 140 are compositionally different and may further have different glass transition temperatures. In one example, the core material 132 of the first fiber 130 comprises an amorphous material 120 having a core glass transition temperature T_{gc} and a difference between the core glass transition temperature T_{gc} and the coating glass transition temperature T_{cg} is at least 20 °C.

Further, a difference between the coating glass transition temperature T_{cg} and the second coating 144 glass transition temperature T_{cg2} may be at least 20 °C. In another example, a difference between the coating glass transition temperature T_{cg} and the second coating 144 glass transition temperature T_{cg2} is at least 30 °C.

In one example, the core material 132 of the first fiber 130 includes an amorphous material 120 having a core glass transition temperature T_{gc} and a difference between the core glass transition temperature T_{gc} and the coating glass transition temperature T_{cg} is at least 30 °C.

The core material 132 may include and material having requisite material properties for the fire seal 100. In another example, the core material 132 of the first fiber 130 includes a polymeric material. In yet another example, the core material 132 of the first fiber 130 includes an aramid polymer. In one specific example, the core material 132 of the first fiber 130 includes Kevlar^{™}.

In one or more examples, the second core material 142 of the second fiber 140, see FIG. 5A and FIG. 5C, includes an amorphous material 120. The second core material 142 of the second fiber 140 has a second core glass transition temperature T_{gc2}. In one example, a difference between the second core glass transition temperature T_{gcs} and the second coating 144 glass transition temperature T_{cg2} is at least 20 °C. In another example, a difference between the second core glass transition temperature T_{gc2} and the second coating 144 glass transition temperature T_{cg2} is at least 30 °C.

The second core material 142 may include and material having requisite material properties for the fire seal 100. In one example, the second core material 142 of the second fiber 140 includes a polymeric material. In another example, the second core material 142 of the second fiber 140 includes an aramid polymer. In one specific example, the second core material 142 of the second fiber 140 includes Kevlar^{™}.

Referring to FIG. 1, disclosed is a multi-member assembly 200. The multi-member assembly 200 includes a first structural member 202 and a second structural member 204 opposed from the first structural member 202. The multi-member assembly 200 further includes a fire seal 100 positioned between the first structural member 202 and the second structural member 204. In one example, the first structural member 202 is an engine and the second structural member 204 is a pylon.

The fire seal 100 of the multi-member assembly 200 includes a bulk material 110. In one example, the bulk material 110 is fire resistant. The fire seal 100 of the multi-member assembly 200 further includes an amorphous material 120 supported by the bulk material 110. Further, in one or more examples, the fire seal 100 of the multi-member assembly 200 may include an infrared-reflective coating 150 on an outside surface 105 of the fire seal 100.

Also disclosed is a fire sealing method. The fire sealing method includes the step of positioning a fire seal 100 between a first structural member 202 and a second structural member 204. The fire seal 100 includes a bulk material 110. In one example, the bulk material 110 is fire resistant. The fire seal 100 further includes an amorphous material 120 supported by the bulk material 110. Further, in one or more examples, the fire seal 100 of the fire sealing method may include an infrared-reflective coating 150 on an outside surface of the fire seal 100.

The fire sealing method may be performed on aircraft components. In one example, the first structural member 202 of the fire-sealing method is an engine of an aircraft and the second structural member 204 of the fire-sealing method is a pylon of the aircraft.

Glass sealants or fire seals 100 incorporating glass fabric or chopped fiber can be used to hermetically seal interfaces between the different structural members 202, 204 of a multi-member assembly 200. Glass has excellent high temperature stability and its ability to soften at high temperature and set again when it cools down provides self-healing capability for the seals subjected to high temperature. If a fire seal 100 develops one or more crack and/or defect 160 due to exposure to very high temperature, the glass can flow and fill such defect 160, see FIG. 4.

The amorphous material 120 may be incorporated into a fire seal 100 as a glass fiber layer within the seal architecture, see FIG. 2, or as chopped fiber glass dispersed in the matrix material or bulk material 110, see FIG. 3. As either a fabric or chopped fiber, tubular, ribbons, fiber bundles, dispersed strands, etc., glass encompasses adequate flexibility to be incorporated into complex seal geometries without damage or brittle failure. Various glass compositions may be utilized to meet requirements for various service temperatures. Glass is a highly inert material and thus can be easily incorporated with a vast range of fire seal 100 materials, particularly in the aerospace industry.

The fire seal 100 as shown and described herein may utilize an amorphous material 120 having multilayer glass-fiber expanded weave structure impregnated within a matrix resin bulk material 110. The amorphous material 120 provides the fire seal 100 with a range of protection at different temperature levels for progressive softening, melting etc. The amorphous material 120 further helps retain mechanical properties when temperature is continuously increasing in the fire seal 100. The fire seal 100 may include two or more families of coated glass fibers having different glass transition and melting temperatures such that one begins to transition at a lower temperature than the other. As one glass fiber melts, it spreads and helps heal defect 160 regions in the fire seal 100. The other glass fiber having a higher melting and glass transition temperature concurrently continues to provide overall strength. Alternative materials may be implemented in the structures shown and described herein including glass coated silica, Kevlar^{™} etc., to provide the beneficial material properties of glass along with the structural properties of silica or Kevlar^{™}. For example, multiple Kevlar^{™} fibers coated with various glass chemistries weaved together may progressively contribute to softening, melting, sealing, healing steps.

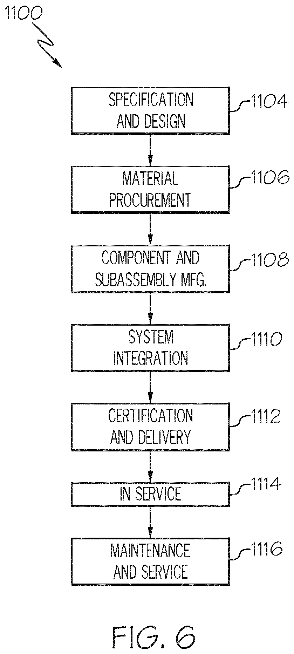

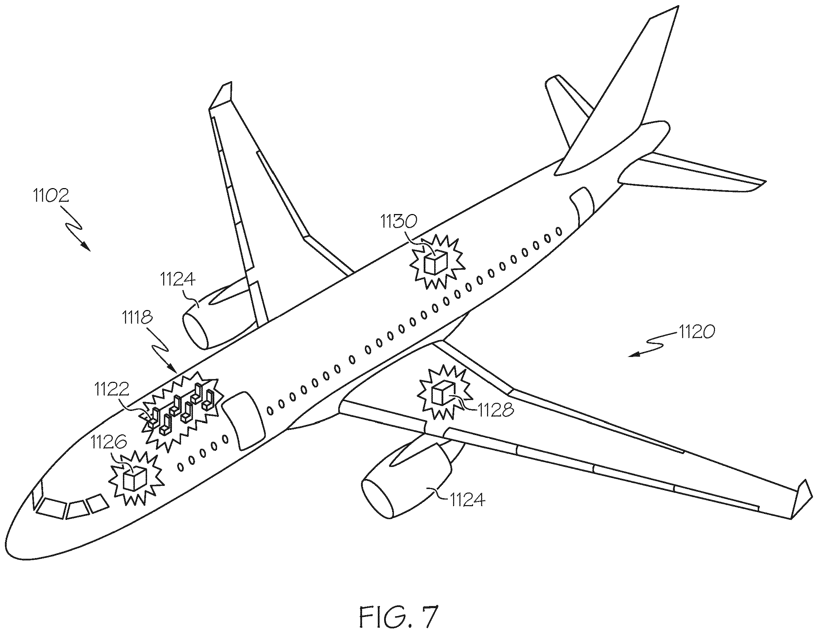

Examples of the subject matter disclosed herein may be described in the context of aircraft manufacturing and service method 1100 as shown in FIG. 6 and aircraft 1102 as shown in FIG. 7. During pre-production, service method 1100 may include specification and design (block 1104) of aircraft 1102 and material procurement (block 1106). During production, component and subassembly manufacturing (block 1108) and system integration (block 1110) of aircraft 1102 may take place. Thereafter, aircraft 1102 may go through certification and delivery (block 1112) to be placed in service (block 1114). While in service, aircraft 1102 may be scheduled for routine maintenance and service (block 1116). Routine maintenance and service may include modification, reconfiguration, refurbishment, etc. of one or more systems of aircraft 1102.

Each of the processes of service method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in FIG. 7, aircraft 1102 produced by service method 1100 may include airframe 1118 with a plurality of high-level systems 1120 and interior 1122. Examples of high-level systems 1120 include one or more of propulsion system 1124, electrical system 1126, hydraulic system 1128, and environmental system 1130. Any number of other systems may be included. Although an aerospace example is shown, the principles disclosed herein may be applied to other industries, such as the automotive industry. Accordingly, in addition to aircraft 1102, the principles disclosed herein may apply to other vehicles, e.g., land vehicles, marine vehicles, space vehicles, etc.

The disclosed fire seals and fire-sealing methods shown or described herein may be employed during any one or more of the stages of the manufacturing and service method 1100. For example, components or subassemblies corresponding to component and subassembly manufacturing (block 1108) may be fabricated or manufactured in a manner similar to components or subassemblies produced while aircraft 1102 is in service (block 1114). Also, one or more examples of the systems, methods, or combination thereof may be utilized during production stages component and subassembly manufacturing (block 1108) and system integration (block 1110), for example, by substantially expediting assembly of or reducing the cost of aircraft 1102. Similarly, one or more examples of the systems or method realizations, or a combination thereof, may be utilized, for example and without limitation, while aircraft 1102 is in service (block 1114) and/or during maintenance and service (block 1116).

The fire seals and fire-sealing methods are described in the context of an aircraft. However, one of ordinary skill in the art will readily recognize that the disclosed fire seals and fire-sealing methods may be utilized for a variety of applications. For example, the disclosed fire seals and fire-sealing methods may be implemented in various types of vehicles including, e.g., helicopters, watercraft, passenger ships, automobiles, various materials processing equipment design, and the like.

Further, the disclosure comprises the following illustrative examples:
According to a first illustrative example, a fire seal (100) comprises: an amorphous material (120); and a bulk material (110) supporting the amorphous material, wherein the bulk material (110) is fire resistant.

Optionally, in the fire seal of the first illustrative example, the amorphous material (120) has a glass transition temperature (T_{g}), and wherein the glass transition temperature (T_{g}) is between approximately 200 °C and approximately 600 °C.

Optionally, in the fire seal of the first illustrative example, the amorphous material (120) has a glass transition temperature (T_{g}), and wherein the glass transition temperature (T_{g}) is between approximately 300 °C and approximately 500 °C.

Optionally, in the fire seal of the first illustrative example, the amorphous material (120) has a glass transition temperature (T_{g}) and the bulk material (110) has a decomposition temperature (T_{D}), and wherein a difference between the glass transition temperature (T_{g}) and the decomposition temperature (T_{D}) is at least 20 °C, preferably wherein:
a difference between the glass transition temperature (T_{g}) and the decomposition temperature (T_{D}) is at least 30 °C.

Optionally, in the fire seal of the first illustrative example, the amorphous material (120) comprises a glass material.

Optionally, in the fire seal of the first illustrative example, the amorphous material (120) comprises a glass powder material.

Optionally, in the fire seal of the first illustrative example, the amorphous material (120) comprises a vanadate glass material.

Optionally, in the fire seal of the first illustrative example, the amorphous material (120) comprises a sponge material.

Optionally, in the fire seal of the first illustrative example, the amorphous material (120) comprises a fiber material, preferably wherein the fire seal further comprises:.
a coating (150) on an outside surface (105) of the fiber material, preferably wherein:
the coating (150) comprises a polymer material; and/or.
the coating (150) comprises a second amorphous material (124) having a second glass transition temperature (T_{g2}), wherein optionally:.
a difference between the glass transition temperature (T_{g}) and the second glass transition temperature (T_{g2}) is at least 10 °C, and/or
a difference between the glass transition temperature (T_{g}) and the second glass transition temperature (T_{g2}) is at least 20 °C.

Optionally, in the fire seal of the first illustrative example, the amorphous material comprises a plurality of glass fibers (122), preferably wherein:
the plurality of glass fibers (122) is braided together; and/or
the plurality of glass fibers (122) is woven together; and/or
the plurality of glass fibers (122) comprises: a first fiber (130) having a first glass transition temperature (T_{fg1}); and a second fiber (140) having a second glass transition temperature (T_{fg2}), optionally wherein:
   a difference between the first glass transition temperature (T_{fg1}) and the second glass transition temperature (T_{fg2}) is at least 20 °C, and/or
   a difference between the first glass transition temperature (T_{fg1}) and the second glass transition temperature (T_{fg2}) is at least 30 °C.

Optionally, in the fire seal of the first illustrative example, the amorphous material (120) comprises: a first fiber (130) having a core material (132) and a glass coating (134) on an outside surface of the core material, the glass coating (134) having a coating glass transition temperature (T_{cg}); and a second fiber (140) entwined with the first fiber (130) having a second core material (142) and a second coating (144) on an outside surface of the second core material (142), the second coating (144) having a second coating glass transition temperature (T_{cg2}), preferably wherein:
the core material (132) of the first fiber (130) and the second core material (142) of the second fiber (140) are compositionally different; and/or.
a difference between the coating glass transition temperature (T_{cg}) and the second coating glass transition temperature (T_{cg2}) is at least 20 °C; and/or.
a difference between the coating glass transition temperature (T_{cg}) and the second coating glass transition temperature (T_{cg2}) is at least 30 °C; and/or.
the core material of the first fiber comprises an amorphous material having a core glass transition temperature (T_{gc}) and wherein a difference between the core glass transition temperature (T_{gc}) and the coating glass transition temperature (T_{cg}) is at least 20 °C; and/or
the core material of the first fiber comprises an amorphous material having a core glass transition temperature (T_{gc}) and wherein a difference between the core glass transition temperature (T_{gc}) and the coating glass transition temperature (T_{cg}) is at least 30 °C; and/or.
the core material (132) of the first fiber (130) comprises a polymeric material; and/or.
the core material (132) of the first fiber (130) comprises an aramid polymer; and/or.
the second core material (142) of the second fiber (140) comprises an amorphous material having a second core glass transition temperature (T_{gc2}) and wherein a difference between the second core glass transition temperature (T_{gcs}) and the second coating glass transition temperature (T_{cg2}) is at least 20 °C; and/or
the second core material (142) of the second fiber (140) comprises an amorphous material having a second core glass transition temperature (T_{gc2}) and wherein a difference between the second core glass transition temperature (T_{gc2}) and the second coating glass transition temperature (T_{cg2}) is at least 30 °C; and/or.
the second core material (142) of the second fiber (140) comprises a polymeric material; and/or.
the second core material (142) of the second fiber (140) comprises an aramid polymer.

Optionally, in the fire seal of the first illustrative example, the amorphous material (120) is layered with the bulk material (110).

Optionally, in the fire seal of the first illustrative example, the amorphous material (120) is dispersed in the bulk material (110).

Optionally, in the fire seal of the first illustrative example, the amorphous material (120) is embedded in the bulk material (110).

Optionally, in the fire seal of the first illustrative example, the bulk material (110) decomposes at a decomposition temperature (T_{D}), and wherein the decomposition temperature (T_{D}) is at least 400 °C.

Optionally, in the fire seal of the first illustrative example, the bulk material (110) decomposes at a decomposition temperature (T_{D}), and wherein the decomposition temperature (T_{D}) is at least 500 °C.

Optionally, in the fire seal of the first illustrative example, the bulk material (110) decomposes at a decomposition temperature (T_{D}), and wherein the decomposition temperature (T_{D}) is at least 600 °C.

Optionally, in the fire seal of the first illustrative example, the bulk material (110) comprises a ceramic material.

Optionally, in the fire seal of the first illustrative example, the bulk material (110) comprises a polymeric material.

Optionally, in the fire seal of the first illustrative example, the bulk material (110) comprises an aramid polymer, preferably wherein:
the aramid polymer comprises a meta-aramid polymer.

Optionally, in the fire seal of the first illustrative example, the bulk material (110) comprises ceramic oxide fibers.

Optionally, in the fire seal of the first illustrative example, the bulk material (110) comprises an amorphous material.

Optionally, in the fire seal of the first illustrative example, the bulk material (110) comprises a fabric material.

Optionally, in the fire seal of the first illustrative example, the bulk material (110) comprises a foam material.

Optionally, in the fire seal of the first illustrative example, the bulk material (110) comprises a felt material.

Optionally, the fire seal of the first illustrative example further comprises a nano-clay material (115) supported by the bulk material (110).

Optionally, the fire seal of the first illustrative example further comprises one or more of silica, alumina, zirconia, graphene, graphene oxide, and graphite oxide supported by the bulk material (110).

Optionally, the fire seal of the first illustrative example further comprises an infrared-reflective coating (150) on an outside surface (105) of the fire seal (100).

According to a second illustrative example, a multi-member assembly (200) comprises: a first structural member (202); a second structural member (204) opposed from the first structural member (202); and a fire seal (100) positioned between the first structural member (202) and the second structural member (204), the fire seal (100) comprising: a bulk material (110); and an amorphous material (120) supported by the bulk material (110), wherein the bulk material (110) is fire resistant.

Optionally, in the multi-member assembly of the second illustrative example, the first structural member (202) is an engine and wherein the second structural (204) member is a pylon.

According to a third illustrative example, a fire sealing method comprises: positioning a fire seal (100) between a first structural member (202) and a second structural member (204), the fire seal (100) comprising: a bulk material (110); and an amorphous material (120) supported by the bulk material (110), wherein the bulk material (110) is fire resistant.

Optionally, in the method of the third illustrative example, the first structural member (202) is an engine of an aircraft.

Optionally, in the method of the third illustrative example, the first structural member (202) is an engine of an aircraft and wherein the second structural member (204) is a pylon of the aircraft.

Although various examples of the disclosed fire seals and associated multi-member assemblies and fire-sealing methods have been shown and described, modifications may occur to those skilled in the art upon reading the specification. The present application includes such modifications and is limited only by the scope of the claims.

## Claims

1. A fire seal (100) comprising:
an amorphous material (120); and
a bulk material (110) supporting the amorphous material, wherein the bulk material (110) is fire resistant, wherein:
the amorphous material (120) comprises a fiber material, and a coating (150) on an outside surface (105) of the fiber material, wherein the coating (150) comprises a second amorphous material (124) having a second glass transition temperature (T_{g2}); and/or
the amorphous material comprises a plurality of glass fibers (122), comprising a first fiber (130) having a first glass transition temperature (T_{fg1}), and a second fiber (140) having a second glass transition temperature (T_{fg2}).

2. The fire seal (100) of Claim 1, wherein the amorphous material (120) has a glass transition temperature (T_{g}), and wherein the glass transition temperature (T_{g}) is between approximately 200 °C and approximately 600 °C.

3. The fire seal (100) of Claim 1 or 2, wherein the amorphous material (120) has a glass transition temperature (T_{g}), and wherein the glass transition temperature (T_{g}) is between approximately 300 °C and approximately 500 °C

4. The fire seal (100) of any one of Claims 1 - 3, wherein the amorphous material (120) has a glass transition temperature (T_{g}) and the bulk material (110) has a decomposition temperature (T_{D}), and wherein a difference between the glass transition temperature (T_{g}) and the decomposition temperature (T_{D}) is at least 20 °C.

5. The fire seal (100) of Claim 4, wherein a difference between the glass transition temperature (T_{g}) and the decomposition temperature (T_{D}) is at least 30 °C.

6. The fire seal (100) of any one of Claims 1 - 5, wherein a difference between the glass transition temperature (T_{g}) and the second glass transition temperature (T_{g2}) is at least 10 °C.

7. The fire seal (100) of any one of Claims 1 - 6, wherein a difference between the first glass transition temperature (T_{fg1}) and the second glass transition temperature (T_{fg2}) is at least 20 °C.

8. The fire seal (100) of any of Claims 1 to 7, wherein the amorphous material (120) comprises:
a first fiber (130) having a core material (132) and a glass coating (134) on an outside surface of the core material, the glass coating (134) having a coating glass transition temperature (T_{cg}); and
a second fiber (140) entwined with the first fiber (130) having a second core material (142) and a second coating (144) on an outside surface of the second core material (142), the second coating (144) having a second coating glass transition temperature (T_{cg2}).

9. The fire seal of Claim 8, wherein a difference between the coating glass transition temperature and the second coating glass transition temperature is at least 20 °C.

10. The fire seal (100) of any of Claims 1 to 9, wherein the amorphous material (120) is embedded in the bulk material (110).

11. The fire seal (100) of any of Claims 1 to 9, wherein the amorphous material (120) is layered with the bulk material (110).

12. The fire seal (100) of any of Claims 1 to 9, wherein the amorphous material (120) is dispersed in the bulk material (110).

13. The fire seal (100) of any of Claims 1 to 12, wherein the bulk material (110) decomposes at a decomposition temperature (T_{D}), and wherein the decomposition temperature (T_{D}) is at least 400 °C.

14. A multi-member assembly (200) comprising:
a first structural member (202);
a second structural member (204) opposed from the first structural member (202); and
a fire seal (100) according to any one of Claims 1 - 13 positioned between the first structural member (202) and the second structural member (204).

15. A fire sealing method comprising:
positioning a fire seal (100) according to any one of Claims 1 - 13 between a first structural member (202) and a second structural member (204).

## Patentansprüche

1. Feuerdichtung (100), umfassend:
ein amorphes Material (120); und
ein voluminöses Material (110), das das amorphe Material stützt, wobei das voluminöse Material (110) feuerbeständig ist, wobei:
das amorphe Material (120) ein Fasermaterial und eine Beschichtung (150) auf einer äußeren Oberfläche (105) des Fasermaterials umfasst, wobei die Beschichtung (150) ein zweites amorphes Material (124) umfasst, das eine zweite Glasübergangstemperatur (T_{g2}) aufweist; und/oder
das amorphe Material eine Vielzahl von Glasfasern (122) umfasst, die eine erste Faser (130), die eine erste Glasübergangstemperatur (T_{fg1}) aufweist, und eine zweite Faser (140), die eine zweite Glasübergangstemperatur (T_{fg2}) aufweist.

2. Feuerdichtung (100) nach Anspruch 1, wobei das amorphe Material (120) eine Glasübergangstemperatur (T_{g}) aufweist, und wobei die Glasübergangstemperatur (T_{g}) zwischen etwa 200 °C und etwa 600 °C liegt.

3. Feuerdichtung (100) nach Anspruch 1 oder 2, wobei das amorphe Material (120) eine Glasübergangstemperatur (T_{g}) aufweist, und wobei die Glasübergangstemperatur (T_{g}) zwischen etwa 300 °C und etwa 500 °C liegt.

4. Feuerdichtung (100) nach einem der Ansprüche 1 bis 3, wobei das amorphe Material (120) eine Glasübergangstemperatur (T_{g}) und das voluminöse Material (110) eine Zersetzungstemperatur (T_{D}) aufweist, und wobei eine Differenz zwischen der Glasübergangstemperatur (T_{g}) und der Zersetzungstemperatur (T_{D}) mindestens 20 °C beträgt.

5. Feuerdichtung (100) nach Anspruch 4, wobei eine Differenz zwischen der Glasübergangstemperatur (T_{g}) und der Zersetzungstemperatur (T_{D}) mindestens 30 °C beträgt.

6. Feuerdichtung (100) nach einem der Ansprüche 1 bis 5, wobei eine Differenz zwischen der Glasübergangstemperatur (T_{g}) und der zweiten Glasübergangstemperatur (T_{g2}) mindestens 10 °C beträgt.

7. Feuerdichtung (100) nach einem der Ansprüche 1 bis 6, wobei eine Differenz zwischen der ersten Glasübergangstemperatur (T_{fg1}) und der zweiten Glasübergangstemperatur (T_{fg2}) mindestens 20 °C beträgt.

8. Feuerdichtung (100) nach einem der Ansprüche 1 bis 7, wobei das amorphe Material (120) Folgendes umfasst:
eine erste Faser (130), die ein Kernmaterial (132) und eine Glasbeschichtung (134) auf einer äußeren Oberfläche des Kernmaterials aufweist, wobei die Glasbeschichtung (134) eine Beschichtungsglasübergangstemperatur (T_{cg}) aufweist; und
eine zweite Faser (140), die mit der ersten Faser (130) verschlungen ist und ein zweites Kernmaterial (142) und eine zweite Beschichtung (144) auf einer äußeren Oberfläche des zweiten Kernmaterials (142) aufweist, wobei die zweite Beschichtung (144) eine zweite Beschichtungsglasübergangstemperatur (T_{cg2}) aufweist.

9. Feuerdichtung nach Anspruch 8, wobei eine Differenz zwischen der Beschichtungsglasübergangstemperatur und der zweiten Beschichtungsglasübergangstemperatur mindestens 20 °C beträgt.

10. Feuerdichtung (100) nach einem der Ansprüche 1 bis 9, wobei das amorphe Material (120) in das voluminöse Material (110) eingebettet ist.

11. Feuerdichtung (100) nach einem der Ansprüche 1 bis 9, wobei das amorphe Material (120) in einer Schicht mit dem voluminösen Material (110) vorliegt.

12. Feuerdichtung (100) nach einem der Ansprüche 1 bis 9, wobei das amorphe Material (120) in dem voluminösen Material (110) dispergiert ist.

13. Feuerdichtung (100) nach einem der Ansprüche 1 bis 12, wobei sich das voluminöse Material (110) bei einer Zersetzungstemperatur (T_{D}) zersetzt, und wobei die Zersetzungstemperatur (T_{D}) mindestens 400 °C beträgt.

14. Mehrteilige Baugruppe (200), umfassend:
ein erstes strukturelles Element (202);
ein zweites strukturelles Element (204), das dem ersten strukturellen Element (202) gegenüberliegt; und
eine Feuerdichtung (100) nach einem der Ansprüche 1 bis 13, die zwischen dem ersten strukturellen Element (202) und dem zweiten strukturellen Element (204) positioniert ist.

15. Verfahren zur Feuerdichtung, umfassend:
Positionieren einer Feuerdichtung (100) nach einem der Ansprüche 1 bis 13 zwischen einem ersten strukturellen Element (202) und einem zweiten strukturellen Element (204).

## Revendications

1. Joint coupe-feu (100) comprenant :
un matériau amorphe (120) ; et
un matériau en vrac (110) supportant le matériau amorphe, dans lequel le matériau en vrac (110) est résistant au feu, dans lequel :
le matériau amorphe (120) comprend un matériau en fibre, et un revêtement (150) sur une surface extérieure (105) du matériau en fibre, dans lequel le revêtement (150) comprend un second matériau amorphe (124) ayant une seconde température de transition vitreuse (T_{g2}) ; et/ou
le matériau amorphe comprend une pluralité de fibres de verre (122), comprenant une première fibre (130) ayant une première température de transition vitreuse (T_{fg1}) et une seconde fibre (140) ayant une seconde température de transition vitreuse (T_{fg2}).

2. Joint coupe-feu (100) selon la revendication 1, dans lequel le matériau amorphe (120) a une température de transition vitreuse (T_{g}), et dans lequel la température de transition vitreuse (T_{g}) est comprise entre environ 200 °C et environ 600 °C.

3. Joint coupe-feu (100) selon la revendication 1 ou 2, dans lequel le matériau amorphe (120) a une température de transition vitreuse (T_{g}), et dans lequel la température de transition vitreuse (T_{g}) est comprise entre environ 300 °C et environ 500 °C

4. Joint coupe-feu (100) selon l'une quelconque des revendications 1 à 3, dans lequel le matériau amorphe (120) a une température de transition vitreuse (T_{g}) et le matériau en vrac (110) a une température de décomposition (T_{D}), et dans lequel la différence entre la température de transition vitreuse (T_{g}) et la température de décomposition (T_{D}) est d'au moins 20 °C.

5. Joint coupe-feu (100) selon la revendication 4, dans lequel une différence entre la température de transition vitreuse (T_{g}) et la température de décomposition (T_{D}) est d'au moins 30 °C.

6. Joint coupe-feu (100) selon l'une quelconque des revendications 1 à 5, dans lequel une différence entre la température de transition vitreuse (T_{g}) et la seconde température de transition vitreuse (T_{g2}) est d'au moins 10 °C.

7. Joint coupe-feu (100) selon l'une quelconque des revendications 1 à 6, dans lequel une différence entre la première température de transition vitreuse (T_{fg1}) et la seconde température de transition vitreuse (T_{fg2}) est d'au moins 20 °C.

8. Joint coupe-feu (100) selon l'une quelconque des revendications 1 à 7, dans lequel le matériau amorphe (120) comprend :
une première fibre (130) ayant un matériau de noyau (132) et un revêtement de verre (134) sur une surface extérieure du matériau de noyau, le revêtement de verre (134) ayant une température de transition vitreuse de revêtement (T_{cg}) ; et
une seconde fibre (140) entrelacée avec la première fibre (130) ayant un second matériau de noyau (142) et un second revêtement (144) sur une surface extérieure du second matériau de noyau (142), le second revêtement (144) ayant une seconde température de transition vitreuse de revêtement (T_{cg2}).

9. Joint coupe-feu selon la revendication 8, dans lequel une différence entre la température de transition vitreuse de revêtement et la seconde température de transition vitreuse de revêtement est d'au moins 20 °C.

10. Joint coupe-feu (100) selon l'une quelconque des revendications 1 à 9, dans lequel le matériau amorphe (120) est intégré dans le matériau en vrac (110).

11. Joint coupe-feu (100) selon l'une quelconque des revendications 1 à 9, dans lequel le matériau amorphe (120) est superposé au matériau en vrac (110).

12. Joint coupe-feu (100) selon l'une quelconque des revendications 1 à 9, dans lequel le matériau amorphe (120) est dispersé dans le matériau en vrac (110).

13. Joint coupe-feu (100) selon l'une quelconque des revendications 1 à 12, dans lequel le matériau en vrac (110) se décompose à une température de décomposition (T_{D}), et dans lequel la température de décomposition (T_{D}) est d'au moins 400 °C.

14. Assemblage de plusieurs éléments (200) comprenant :
un premier élément structurel (202) ;
un second élément structurel (204) opposé au premier élément structurel (202) ; et
un joint coupe-feu (100) selon l'une quelconque des revendications 1 à 13, positionné entre le premier élément structurel (202) et le second élément structurel (204).

15. Procédé d'étanchéité au feu, comprenant :
le positionnement d'un joint coupe-feu (100) selon l'une quelconque des revendications 1 à 13 entre un premier élément structurel (202) et un second élément structurel (204).
